# EUROPÄISCHE PATENTSCHRIFT

(11) **EP 3 849 798 B1**
(45) Veröffentlichungstag und Bekanntmachung des Hinweises auf die Patenterteilung: **03.08.2022**
(21) Anmeldenummer: 19763027.0
(22) Anmeldetag: 11.09.2019
(51) Int. Cl.: B32B 15/095, B32B 15/14, B32B 15/18, B32B 5/02, B32B 15/20, B32B 27/20, B32B 27/40

(54) **LAMINATE AUS METALL UND EINER POLYMERZWISCHENSCHICHT AUS THERMOPLASTISCHEM POLYURETHAN**
LAMINATES COMPRISING METAL AND AN INTERMEDIATE POLYMER LAYER MADE FROM THERMOPLASTIC POLYURETHANE
STRATIFIÉS EN MÉTAL ET D'UNE COUCHE INTERMÉDIAIRE DE POLYMÈRE DE POLYURÉTHANE THERMOPLASTIQUE

(30) Priorität: 14.09.2018 EP 18194540
(43) Veröffentlichungstag der Anmeldung: 21.07.2021
(73) Patentinhaber: BASF SE, 67056 Ludwigshafen am Rhein (DE)
(72) Erfinder: DESBOIS, Philippe, 67056 Ludwigshafen (DE); SIMON, Jasmina, 67056 Ludwigshafen (DE)
(74) Vertreter: BASF IP Association
(86) Internationale Anmeldenummer: PCT/EP2019/074259
(87) Internationale Veröffentlichungsnummer: WO 2020/053295

(56) Entgegenhaltungen:
- EP-A1- 2 085 215
- DE-A1- 10 327 010
- US-A1- 2011 200 816

## Beschreibung

Die vorliegende Erfindung betrifft ein Laminat umfassend mindestens eine erste Schicht mindestens eines ersten Metalls und mindestens eine weitere Schicht einer Polymerzusammensetzung (PZ) sowie ein Verfahren zur Herstellung des erfindungsgemäßen Laminats.

Eine in der heutigen Zeit häufig gestellte Aufgabe ist die Bereitstellung neuer Materialien, insbesondere für den Flugzeugbau, den Automobilbau und den Bootsbau, die leichter sind als die bislang eingesetzten Materialien. Gleichzeitig sollen diese neuen Materialien dieselben mechanischen Eigenschaften, insbesondere Festigkeit, Steifigkeit und Stabilität wie die bekannten Materialien aufweisen, oder diesen sogar überlegen sein. Die neuen Materialien sollen darüber hinaus mit bekannten Verfahren umgeformt werden können, wie beispielsweise mittels Tiefziehen, Walzen, Biegen, Prägen oder Falzen.

Die WO 2005/014278 beschreibt Laminate, die zwischen zwei äußeren Metallschichten eine klebende Polymerschicht enthalten. Diese Polymerschicht enthält ein Polyamid 6, Polyamid 6.6, Polyamid 11, Polyamid 12, Polyamid 4.6, Polyamid 6.10 oder Polyamid 6.12 und ein Copolymer aus Ethylen und einer ungesättigten Carbonsäure und/oder einem Carbonsäurederivat und einem reaktiven Copolymer. Das Copolymer aus Ethylen und einer ungesättigten Carbonsäure und/oder einem Carbonsäurederivat kann mit polaren Gruppen gegraftet werden.

Nachteilig bei den in der WO 2005/014278 beschriebenen Laminaten ist, dass sie insbesondere nach Lagerung in feuchter Umgebung nur noch eine schlechte Zugfestigkeit aufweisen. Darüber hinaus weist die Polymerschicht häufig eine schwankende Feuchtigkeitsaufnahme und daraus resultierend schwankende Haftungseigenschaften auf.

Die US 2011/0200816 beschreibt Laminate, die zwei Metallschichten und eine dazwischenliegende Polymerschicht umfassen. Die Polymerschicht enthält beispielsweise ein Polyamid 6/66 Copolymer. Darüber hinaus sind verschiedene weitere thermoplastische Polymere wie Polyolefine und Polyimide beschrieben. Auch die in US 2011/0200816 beschriebenen Laminate weisen insbesondere nach Lagerung in feuchter Umgebung nur schlechte Zugfestigkeiten auf oder werden durch Luftfeuchtigkeit sogar bis zur Unbenutzbarkeit zerstört.

Die DE 10 2011 084519 beschreibt Siegelschichten für Solarzellen, die eine erste Außenschicht, eine Mittelschicht und eine zweite Außenschicht umfassen. Die Schichten können Polyamide wie beispielsweise Polyamid 6 oder Polyamid 66 enthalten.

Die der vorliegenden Erfindung zugrunde liegende Aufgabe besteht somit darin, ein Laminat sowie ein Verfahren zu dessen Herstellung bereitzustellen, welches die Nachteile der im Stand der Technik beschriebenen Laminate nicht oder nur in vermindertem Maße aufweist.

Gelöst wurde diese Aufgabe durch ein Laminat umfassend mindestens eine erste Schicht mindestens eines ersten Metalls und mindestens eine weitere Schicht einer Polymerzusammensetzung (PZ), die mindestens ein thermoplastisches Polyurethan (TPU) enthält, dadurch gekennzeichnet, dass das mindestens eine thermoplastische Polyurethan (TPU) erhältlich ist durch Polymerisation mindestens der Komponenten
(A) mindestens ein Polyetherpolyol,
(B) mindestens ein Polyisocyanat,
(C) mindestens ein C₂-C₂₀-Polyol.

Es wurde überraschend gefunden, dass die erfindungsgemäßen Laminate ein besonders gutes E-Modul und ein gutes Peel-Verhalten aufweisen.

Nachfolgend wird die vorliegende Erfindung näher erläutert.

### Laminat

Erfindungsgemäß umfasst das Laminat mindestens eine erste Schicht mindestens eines ersten Metalls und mindestens eine weitere Schicht einer Polymerzusammensetzung (PZ).

"Mindestens eine erste Schicht" bedeutet im Rahmen der vorliegenden Erfindung sowohl genau eine erste Schicht als auch zwei oder mehrere erste Schichten.

"Mindestens ein erstes Metall" bedeutet im Rahmen der vorliegenden Erfindung sowohl genau ein erstes Metall als auch eine Mischung aus zwei oder mehreren ersten Metallen.

"Mindestens eine weitere Schicht" bedeutet im Rahmen der vorliegenden Erfindung sowohl genau eine weitere Schicht als auch zwei oder mehrere weitere Schichten.

Bevorzugt umfasst das Laminat zusätzlich mindestens eine zweite Schicht mindestens eines zweiten Metalls, wobei die mindestens eine erste Schicht mindestens eines ersten Metalls mit der mindestens einen zweiten Schicht mindestens eines zweiten Metalls über die mindestens eine weitere Schicht der Polymerzusammensetzung (PZ) verbunden ist. In einem solchen Laminat folgt also auf die mindestens eine erste Schicht mindestens eine weitere Schicht und auf diese wiederum mindestens eine zweite Schicht.

Ein solches Laminat, das mindestens eine erste Schicht, mindestens eine weitere Schicht und mindestens eine zweite Schicht umfasst, wird auch als "Sandwichmaterial" bezeichnet.

Gegenstand der vorliegenden Erfindung ist daher auch ein Laminat, bei dem das Laminat zusätzlich mindestens eine zweite Schicht mindestens eines zweiten Metalls umfasst und bei dem die mindestens eine erste Schicht mit der mindestens einen zweiten Schicht über die mindestens eine weitere Schicht verbunden ist.

Das mindestens eine erste Metall der mindestens einen ersten Schicht kann gleich oder verschieden von dem mindestens einen zweiten Metall der mindestens einen zweiten Schicht sein. Bevorzugt ist das mindestens eine erste Metall der mindestens einen ersten Schicht gleich dem mindestens einen zweiten Metall der mindestens einen zweiten Schicht.

Das Laminat umfasst mindestens eine erste Schicht mindestens eines ersten Metalls. Anders ausgedrückt umfasst das Laminat mindestens eine erste Schicht, die aus mindestens einem ersten Metall besteht.

Die mindestens eine erste Schicht mindestens eines ersten Metalls weist beispielsweise eine Dicke im Bereich von 0,1 bis 0,6 mm, bevorzugt im Bereich von 0,15 bis 0,4 mm und insbesondere bevorzugt im Bereich von 0,18 bis 0,3 mm auf.

Gegenstand der vorliegenden Erfindung ist daher auch ein Laminat, bei dem die mindestens eine erste Schicht eine Dicke im Bereich von 0,1 bis 0,6 mm aufweist.

Bevorzugt umfasst das Laminat zusätzlich mindestens eine zweite Schicht mindestens eines zweiten Metalls. Anders ausgedrückt umfasst das Laminat bevorzugt zusätzlich mindestens eine zweite Schicht, die aus mindestens einem zweiten Metall besteht.

Die mindestens eine zweite Schicht mindestens eines zweiten Metalls weist beispielsweise eine Dicke im Bereich von 0,1 bis 0,6 mm, bevorzugt im Bereich von 0,15 bis 0,4 mm und insbesondere bevorzugt im Bereich von 0,18 bis 0,3 mm auf. Gegenstand der vorliegenden Erfindung ist daher auch ein Laminat, bei dem das Laminat zusätzlich mindestens eine zweite Schicht mindestens eines zweiten Metalls umfasst, wobei die mindestens eine zweite Schicht eine Dicke im Bereich von 0,1 bis 0,6 mm aufweist.

Die Dicke der mindestens einen zweiten Schicht kann gleich oder verschieden von der Dicke der mindestens einen ersten Schicht sein. Bevorzugt ist die Dicke der mindestens einen zweiten Schicht gleich der Dicke der mindestens einen ersten Schicht.

Als das mindestens eine erste Metall der mindestens einen ersten Schicht eignen sich alle dem Fachmann bekannten Metalle und Metalllegierungen, die bei den Herstellungstemperaturen und den Gebrauchstemperaturen des Laminats fest sind. Bevorzugt ist das mindestens eine erste Metall der mindestens einen ersten Schicht ausgewählt aus der Gruppe bestehend aus Eisen, Aluminium, Kupfer, Nickel und Magnesium sowie Legierungen daraus. Besonders bevorzugt ist das mindestens eine erste Metall eine Legierung aus Eisen, insbesondere bevorzugt ist das mindestens eine erste Metall Stahl.

Gegenstand der vorliegenden Erfindung ist daher auch ein Laminat, bei dem das mindestens eine erste Metall der mindestens einen ersten Schicht ausgewählt ist aus der Gruppe bestehend aus Eisen, Aluminium, Kupfer, Nickel und Magnesium sowie Legierungen daraus.

Gegenstand der vorliegenden Erfindung ist daher auch ein Laminat, bei dem das mindestens eine erste Metall ausgewählt ist aus der Gruppe bestehend aus Eisen, Aluminium, Kupfer, Nickel und Magnesium sowie Legierungen daraus.

Stahl ist dem Fachmann bekannt. Unter "Stahl" werden im Rahmen der vorliegenden Erfindung Legierungen, die als Hauptbestandteil Eisen enthalten, verstanden. Dies entspricht der Definition von Stahl gemäß DIN EN 10020:2000-07.

Das mindestens eine erste Metall kann beschichtet oder unbeschichtet sein. Bevorzugt ist das mindestens eine erste Metall beschichtet. Geeignete Beschichtungen für das mindestens eine erste Metall sind dem Fachmann als solche bekannt und beispielsweise Haftvermittlerschichten, Korrosionsschutzschichten, Farbe, Zink- oder Magnesiumbeschichtungen.

Bevorzugt ist das mindestens eine erste Metall verzinkt. "Verzinkt" bedeutet, dass das mindestens eine erste Metall mit einem weiteren Metall, insbesondere mit Zink oder Legierungen von Zink, beschichtet ist.

Besonders bevorzugt ist das mindestens eine erste Metall daher verzinkter Stahl.

Das Verzinken des mindestens einen ersten Metalls kann nach dem Fachmann bekannten Methoden erfolgen, beispielsweise durch Feuerverzinkung oder durch galvanisches Verzinken.

Ist das mindestens eine erste Metall verzinkt, so kann es darüber hinaus noch weitere Beschichtungen, wie beispielsweise Haftvermittlerschichten und/oder Farbe, aufweisen. Dies ist dem Fachmann bekannt.

Das Beschichten des mindestens einen ersten Metalls kann nach allen dem Fachmann bekannten Methoden erfolgen, beispielsweise kann die Beschichtung aus einer wässrigen Lösung oder einer Dispersion erfolgen.

Für das mindestens eine zweite Metall der mindestens einen zweiten Schicht gelten die zuvor beschriebenen Ausführungen und Bevorzugungen für das mindestens eine erste Metall der mindestens einen ersten Schicht entsprechend.

Gegenstand der vorliegenden Erfindung ist daher auch ein Laminat, bei dem das Laminat zusätzlich mindestens eine zweite Schicht mindestens eines zweiten Metalls umfasst, wobei das mindestens eine zweite Metall der mindestens einen zweiten Schicht ausgewählt ist aus der Gruppe bestehend aus Eisen, Aluminium, Kupfer, Nickel und Magnesium sowie Legierungen daraus.

Das Laminat umfasst mindestens eine weitere Schicht einer Polymerzusammensetzung (PZ). Anders ausgedrückt bedeutet dies, dass die mindestens eine weitere Schicht aus der Polymerzusammensetzung (PZ) besteht.

Die mindestens eine weitere Schicht einer Polymerzusammensetzung (PZ) weist beispielsweise eine Dicke im Bereich von 0,02 bis 1,5 mm, bevorzugt im Bereich von 0,05 bis 1 mm und insbesondere bevorzugt im Bereich von 0,1 bis 0,5 mm auf.

Gegenstand der vorliegenden Erfindung ist daher auch ein Laminat, bei dem die mindestens eine weitere Schicht eine Dicke im Bereich von 0,02 bis 1,5 mm aufweist.

Gegenstand der vorliegenden Erfindung ist weiterhin auch ein Laminat, bei dem die mindestens eine erste Schicht eine Dicke im Bereich von 0,1 mm bis 0,6 mm aufweist und/oder bei dem die mindestens eine weitere Schicht eine Dicke im Bereich von 0,02 bis 1,5 mm aufweist.

### Polymerzusammensetzung (PZ)

Erfindungsgemäß enthält die Polymerzusammensetzung (PZ) mindestens ein thermoplastisches Polyurethan (TPU).

"Mindestens ein thermoplastisches Polyurethan (TPU)" bedeutet im Rahmen der vorliegenden Erfindung sowohl genau ein thermoplastisches Polyurethan (TPU) als auch eine Mischung (Blend) aus zwei oder mehreren thermoplastischen Polyurethanen (TPU).

Die Polymerzusammensetzung (PZ) kann darüber hinaus zusätzlich mindestens ein weiteres Polymer enthalten.

"Mindestens ein weiteres Polymer" bedeutet im Rahmen der vorliegenden Erfindung sowohl genau ein weiteres Polymer als auch eine Mischung (Blend) aus zwei oder mehreren weiteren Polymeren.

Als mindestens ein weiteres Polymer eignen sich alle dem Fachmann bekannten weiteren Polymere. Es versteht sich von selbst, dass das mindestens eine weitere Polymer von dem mindestens einen thermoplastischen Polyurethan (TPU) verschieden ist.

Bevorzugt ist das mindestens eine weitere Polymer ausgewählt aus der Gruppe bestehend aus Polyethylen und Copolymeren aus zumindest zwei Monomeren, ausgewählt aus der Gruppe bestehend aus Ethylen, Acrylsäure, Maleinsäureanhydrid, iso-Butylen, Buten, Propylen, Okten, Alkylacrylat und Alkylmethacrylat.

Gegenstand der vorliegenden Erfindung ist daher auch ein Laminat, bei dem die Polymerzusammensetzung (PZ) zusätzlich mindestens ein weiteres Polymer ausgewählt aus der Gruppe bestehend aus Polyethylen und Copolymeren aus zumindest zwei Monomeren, ausgewählt aus der Gruppe bestehend aus Ethylen, iso-Butylen, Buten, Propylen, Okten, Alkylacrylat, Alkylmethacrylat, Acrylsäure und Maleinsäureanhydrid, enthält.

Alkylacrylate sind dem Fachmann bekannt und werden auch als "Acrylsäurealkylester" bezeichnet. Alkylacrylate bilden sich bei der Umsetzung von Acrylsäure mit einem Alkylalkohol. Erfindungsgemäß bevorzugt ist n-Butylacrylat als Alkylacrylat.

Alkylmethacrylate sind dem Fachmann ebenfalls bekannt und werden auch als "Methacrylsäurealkylester" bezeichnet. Alkylmethacrylate sind beispielsweise erhältlich durch Umsetzung von Methacrylsäure mit einem Alkylalkohol. Alkylmethacrylate können beispielsweise auch substituiert sein. Ein Beispiel für substituierte Alkylmethacrylate ist 2,3-Epoxypropylmethacrylat. 2,3-Epoxypropylmethacrylat ist auch bekannt als "Glycidylmethacrylat". Erfindungsgemäß bevorzugt ist Alkylmethacrylat ausgewählt aus der Gruppe bestehend aus Methylmethacrylat und 2,3-Expoypropylmethacrylat.

Darüber hinaus kann die Polymerzusammensetzung (PZ) zusätzlich mindestens einen Füllstoff enthalten.

"Mindestens ein Füllstoff" bedeutet im Rahmen der vorliegenden Erfindung sowohl genau ein Füllstoff als auch eine Mischung aus zwei oder mehreren Füllstoffen.

Als Füllstoff eignen sich alle dem Fachmann bekannten Füllstoffe, die mit den Komponenten (A), (B) und (C) sowie gegebenenfalls dem mindestens einen weiteren Polymer in der Polymerzusammensetzung (PZ) gemischt werden können.

Bevorzugt ist der mindestens eine Füllstoff ausgewählt aus der Gruppe bestehend aus anorganischen Füllstoffen, organischen Füllstoffen und Naturfüllstoffen.

Der mindestens eine Füllstoff ist üblicherweise partikelförmig. Beispielsweise kann der mindestens eine Füllstoff ein Fasermaterial sein oder beispielsweise in Form von Kugeln vorliegen. Der mindestens eine Füllstoff weist beispielsweise ein Aspektverhältnis im Bereich von 1 bis 15, bevorzugt im Bereich von 1 bis 10 und insbesondere bevorzugt im Bereich von 1 bis 5 auf. Unter dem "Aspektverhältnis" wird im Rahmen der vorliegenden Erfindung das Verhältnis der größten Dimension eines Partikels des mindestens einen Füllstoffs zur kleinsten Dimension eines Partikels des mindestens einen Füllstoffs verstanden.

Unter "Fasermaterialien" werden im Rahmen der vorliegenden Erfindung sämtliche Materialien verstanden, die Fasern aufweisen, wie beispielsweise einzelne Fasern, Faserbündel (Rovings), Vliese, Gelege, Gewebe oder Gestricke.

Beispielsweise ist der mindestens eine Füllstoff daher ausgewählt aus der Gruppe bestehend aus Wollastonit, Talkum, Borfasermaterialien, Glasfasermaterialien, Kohlenstofffasermaterialien, Kieselsäurefasermaterialien, Keramikfasermaterialien, Basaltfasermaterialien, Metallfasermaterialien, Aramidfasermaterialien, Poly-(p-Phenylen-2,6-Benzobisoxazol)-Fasermaterialien, Polyesterfasermaterialien, Nylonfasermaterialien, Polyethylenfasermaterialien, Holzfasermaterialien, Flachsfasermaterialien, Hanffasermaterialien, Kokosfasermaterialien und Sisalfasermaterialien.

Besonders bevorzugt ist der mindestens eine Füllstoff ausgewählt aus der Gruppe bestehend aus Glasfasermaterialien, Kohlenstofffasermaterialien, Aramidfasermaterialien, Poly-(p-Phenylen-2,6-Benzobisoxazol)-Fasermaterialien, Borfasermaterialien, Metallfasermaterialien und Kaliumtitanatfasermaterialien. Insbesondere bevorzugt ist der mindestens eine Füllstoff ein Glasfasermaterial.

Bevorzugt enthält die Polymerzusammensetzung (PZ) keinen Füllstoff.

Die Polymerzusammensetzung (PZ) enthält beispielsweise im Bereich von 0 bis 50 Gew.-%, bevorzugt im Bereich von 5 bis 50 Gew.-% und insbesondere bevorzugt im Bereich von 10 bis 30 Gew.-% des mindestens einen weiteren Polymers, jeweils bezogen auf die Summe der Gewichtsprozente des mindestens einen thermoplastischen Polyurethans (TPU), des mindestens einen weiteren Polymers und gegebenenfalls des mindestens einen Füllstoffs, bevorzugt bezogen auf das Gesamtgewicht der Polymerzusammensetzung (PZ).

Die Polymerzusammensetzung (PZ) enthält beispielsweise im Bereich von 0,1 bis 70 Gew.-% des mindestens einen Füllstoffs, bevorzugt im Bereich von 0,5 bis 60 Gew.-% und insbesondere bevorzugt im Bereich von 1 bis 50 Gew.-% des mindestens einen Füllstoffs, jeweils bezogen auf die Summe der Gewichtsprozente des mindestens einen thermoplastischen Polyurethans (TPU), des mindestens einen Füllstoffs und gegebenenfalls des mindestens einen weiteren Polymers, bevorzugt bezogen auf das Gesamtgewicht der Polymerzusammensetzung (PZ).

Die Summe der Gewichtsprozente des thermoplastischen Polyurethans (TPU), gegebenenfalls des mindestens einen weiteren Polymers und gegebenenfalls des mindestens einen Füllstoffs, ergibt üblicherweise 100 Gew.-%.

Die Polymerzusammensetzung (PZ) kann darüber hinaus dem Fachmann bekannte Additive enthalten. Beispielsweise sind Additive, die in der Polymerzusammensetzung (PZ) enthalten sein können, ausgewählt aus der Gruppe bestehend aus Stabilisatoren, Farbstoffen, Antistatika, Füllölen, Oberflächenverbesserern, Sikkativen, Entformungshilfsmitteln, Trennmitteln, Antioxidantien, Lichtstabilisatoren, PVC-Stabilisatoren, Gleitmitteln, Flammschutzmitteln, Treibmitteln, Schlagzähmodifikatoren, Haftvermittlern, Kopplungsmitteln und Nukleierungshilfsmitteln.

Gegenstand der vorliegenden Erfindung ist daher auch ein Laminat, bei dem die Polymerzusammensetzung (PZ) die Polymerzusammensetzung (PZ) zusätzlich mindestens ein Additiv ausgewählt aus der Gruppe bestehend aus Stabilisatoren, Farbstoffen, Antistatika, Füllölen, Oberflächenverbesserern, Sikkativen, Entformungshilfsmitteln, Trennmitteln, Antioxidantien, Lichtstabilisatoren, PVC-Stabilisatoren, Gleitmitteln, Flammschutzmitteln, Treibmitteln, Schlagzähmodifikatoren, Haftvermittlern, Kopplungsmitteln und Nukleierungshilfsmitteln enthält.

Diese Additive sind dem Fachmann als solche bekannt. Kopplungsmittel werden auch als "Vernetzungsmittel" bezeichnet. Unter "Haftvermittlern" werden im Rahmen der vorliegenden Erfindung Additive verstanden, die die Haftung der Polymerzusammensetzung (PZ) der mindestens einen weiteren Schicht an die mindestens eine erste Schicht sowie gegebenenfalls an die mindestens eine zweite Schicht weiter verbessern.

Es versteht sich von selbst, dass, wenn die Polymerzusammensetzung (PZ) zusätzlich Additive enthält, die Summe der Gewichtsprozente des thermoplastischen Polyurethans (TPU), der Additive, gegebenenfalls des mindestens einen weiteren Polymers und gegebenenfalls des mindestens einen Füllstoffs, üblicherweise 100 Gew.-% ergibt.

Die Polymerzusammensetzung (PZ) weist üblicherweise ein E-Modul (Elastizitätsmodul) im Bereich von 800 bis 1400 MPa, bevorzugt im Bereich von 900 bis 1350 MPa und insbesondere bevorzugt im Bereich von 1000 bis 1300 MPa auf, bestimmt gemäß ISO 527-1:2012.

### Thermoplastisches Polyurethan (TPU)

Erfindungsgemäß enthält die Polymerzusammensetzung (PZ) mindestens ein thermoplastisches Polyurethan, welches erhältlich ist durch Polymerisation mindestens der Komponenten:
(A) mindestens ein Polyetherpolyol,
(B) mindestens ein Polyisocyanat,
(C) mindestens ein C₂-C₂₀-Polyol.

Beispielsweise ist das mindestens eine thermoplastische Polyurethan (TPU) erhältlich durch Polymerisation von im Bereich von 5 bis 50 Gew.-% der Komponente (A), im Bereich von 20 bis 80 Gew.-% der Komponente (B) und im Bereich von 5 bis 40 Gew.% der Komponente (C), jeweils bezogen auf die Summe der Gew.-% der Komponenten (A), (B) und (C).

Bevorzugt ist das mindestens eine thermoplastische Polyurethan (TPU) erhältlich durch Polymerisation von im Bereich von 10 bis 40 Gew.-% der Komponente (A), im Bereich von 40 bis 70 Gew.-% der Komponente (B) und im Bereich von 8 bis 30 Gew.% der Komponente (C), jeweils bezogen auf die Summe der Gew.-% der Komponenten (A), (B) und (C).

Besonders bevorzugt ist das mindestens eine thermoplastische Polyurethan (TPU) erhältlich durch Polymerisation von im Bereich von 14 bis 35 Gew.-% der Komponente (A), im Bereich von 50 bis 65 Gew.-% der Komponente (B) und im Bereich von 13 bis 24 Gew.-% der Komponente (C), jeweils bezogen auf die Summe der Gew.-% der Komponenten (A), (B) und (C).

Gegenstand der vorliegenden Erfindung ist daher auch ein Laminat, bei dem das thermoplastische Polyurethan (TPU) erhältlich ist durch Polymerisation von im Bereich von 5 bis 50 Gew.-% der Komponente (A), im Bereich von 20 bis 80 Gew.-% der Komponente (B) und im Bereich von 5 bis 40 Gew.-% der Komponente (C), jeweils bezogen auf die Summe der Gewichtsprozente der Komponenten (A), (B) und (C).

Es versteht sich von selbst, dass sich die Gew.-% der Komponenten (A), (B) und (C) auf die Gew.-% vor der Polymerisation der Komponenten (A), (B) und (C) bezieht. Während der Polymerisation können sich die Gew.-% gegebenenfalls ändern. Dies ist dem Fachmann als solches bekannt.

Die Komponenten (A), (B) und (C) werden weiter unten näher erläutert.

"Mindestens ein thermoplastisches Polyurethan (TPU)" bedeutet im Rahmen der vorliegenden Erfindung sowohl genau ein thermoplastisches Polyurethan (TPU) als auch eine Mischung (Blend) aus zwei oder mehreren thermoplastischen Polyurethanen (TPU).

Enthält die Polymerzusammensetzung (PZ) zwei oder mehrere thermoplastische Polyurethane (TPU), so erfüllt die Mischung aus den zwei oder mehreren thermoplastischen Polyurethanen (TPU) die nachfolgend beschriebenen Eigenschaften für das mindestens eine thermoplastische Polyurethan (TPU).

Anders ausgedrückt, weist in diesem Fall der Blend aus den zwei oder mehreren thermoplastischen Polyurethanen (TPU) die nachfolgend beschriebenen Eigenschaften auf. Dies bedeutet, dass in diesem Fall auch die einzelnen in dem Blend enthaltenen thermoplastischen Polyurethane (TPU) von der nachfolgenden Beschreibung abweichende Eigenschaften aufweisen können, sofern der Blend diese Eigenschaften aufweist.

Das mindestens eine thermoplastische Polyurethan (TPU) ist erfindungsgemäß erhältlich durch Polymerisation der Komponenten (A), (B) und (C). Die Komponente (A) ist mindestens ein Polyetherpolyol. Daher wird das mindestens eine thermoplastische Polyurethan (TPU) auch als polyetherbasiertes thermoplastisches Polyurethan (TPU) bezeichnet.

Gegenstand der vorliegenden Erfindung ist daher auch ein Laminat, bei dem das mindestens eine thermoplastische Polyurethan (TPU) mindestens ein polyetherbasiertes thermoplastisches Polyurethan (TPU) ist.

Es ist bevorzugt, dass zur Herstellung des mindestens einen thermoplastischen Polyurethans (TPU) kein Polyester als Komponente eingesetzt wird. Insbesondere bevorzugt wird keine Komponente eingesetzt, die bei der Polymerisation Esterbindungen bildet.

Gegenstand der vorliegenden Erfindung ist daher auch ein Laminat, bei dem bei der Polymerisation der Komponenten (A), (B) und (C) keine Komponente eingesetzt wird, die bei der Polymerisation Esterbindungen bildet.

Ein thermoplastisches Polyurethan (TPU), bei dessen Herstellung ein Polyester und/oder eine Komponente, die bei der Polymerisation Esterbindungen bildet, eingesetzt wird, wird auch als polyesterbasiertes thermoplastisches Polyurethan (TPU) bezeichnet. Bevorzugt ist das mindestens eine thermoplastische Polyurethan (TPU) kein polyesterbasiertes thermoplastisches Polyurethan (TPU).

Gegenstand der vorliegenden Erfindung ist daher auch ein Laminat, bei dem das mindestens eine thermoplastische Polyurethan (TPU) kein polyesterbasiertes thermoplastisches Polyurethan (TPU) ist.

Bei der Polymerisation der Komponenten (A), (B) und (C) zur Herstellung des mindestens einen thermoplastischen Polyurethans (TPU) kann zusätzlich mindestens eine weitere Komponente ausgewählt aus der Gruppe bestehend aus Kettenreglern (D), Katalysatoren (E) und Zusatzstoffen (F) eingesetzt werden.

Gegenstand der vorliegenden Erfindung ist daher auch ein Laminat, bei dem das mindestens eine thermoplastische Polyurethan (TPU) erhältlich ist durch Polymerisation der Komponenten (A), (B) und (C) sowie mindestens einer weiteren Komponente ausgewählt aus der Gruppe bestehend aus Kettenreglern (D), Katalysatoren (E) und Zusatzstoffen (F).

Geeignete Kettenregler (D) sind dem Fachmann als solche bekannt.

Unter "Kettenreglern" werden im Rahmen der vorliegenden Erfindung Verbindungen verstanden, die genau eine gegenüber Isocyanaten reaktive Gruppe aufweisen. Beispiele für derartige Kettenregler sind monofunktionelle Alkohole, monofunktionelle Amine und monofunktionelle Polyole. Ein bevorzugter Kettenregler ist Methylamin. Beispielsweise weist der Kettenregler (D) ein Molekulargewicht im Bereich von 30 g/mol bis 500 g/mol auf.

Kettenregler (D) werden bevorzugt in einer Menge im Bereich von 0 bis 5 Gew.-%, bevorzugt im Bereich von 0,1 bis 1 Gew.-%, bezogen auf die Summe der Gewichtsprozente der Komponente (A), der Komponente (C) und der Komponente (D), eingesetzt.

Als Katalysator (E) eignen sich dem Fachmann bekannte Verbindungen, die die Reaktion zwischen den Isocyanatgruppen (NCO-Gruppen) der Komponente (B) und den Hydroxygruppen der Komponenten (A) und (C) katalysieren. Beispielsweise ist der Katalysator (E) ausgewählt aus der Gruppe bestehend aus tertiären Aminen und organischen Metallverbindungen.

Geeignete tertiäre Amine sind dem Fachmann bekannt und beispielsweise ausgewählt aus der Gruppe bestehend aus Triethylamin, Dimethylcyclohexylamin, N-Methylmorpholin, N,N-Dimethylpiperazin, 2-(Dimethylaminoethoxy)-ethanol und Diazabicyclo-(2,2,2)-oktan.

Geeignete organische Metallverbindungen sind beispielsweise ausgewählt aus der Gruppe bestehend aus Titansäureester, Eisen-(III)-acetylacetonat, Zinndiacetat, Zinndioktanoat, Zinndilaurat, Dibutylzinndiacetat und Dibutylzinndilaurat.

Üblicherweise wird der Katalysator (E) in Mengen von 0,0001 Gew.-% bis 0,1 Gew.-%, bezogen auf 100 Gew.-% der Komponenten (A) und (C), eingesetzt.

Als Zusatzstoffe (F) eignen sich beispielsweise Hydrolyseschutzmittel und Flammschutzmittel.

Das mindestens eine thermoplastische Polyurethan (TPU) kann nach dem Fachmann bekannten Verfahren hergestellt werden. Beispielsweise wird das mindestens eine thermoplastische Polyurethan (TPU) in einem kontinuierlichen Verfahren wie einem reaktiven Extrusionsverfahren, einem Bandverfahren, einem "One-Shot"-Verfahren oder einem Präpolymerverfahren hergestellt. Diese Verfahren sind dem Fachmann als solche bekannt.

Das mindestens eine thermoplastische Polyurethan (TPU) weist üblicherweise eine Schmelztemperatur (T_{M(TPU)}) auf. Die Schmelztemperatur (T_{M(TPU)}) des mindestens einen thermoplastischen Polyurethans (TPU) liegt beispielsweise im Bereich von 140 bis 240 °C, bevorzugt im Bereich von 150 bis 230 °C und insbesondere bevorzugt im Bereich von 170 bis 220 °C, bestimmt gemäß ISO 11357-3:2014.

Gegenstand der vorliegenden Erfindung ist daher auch ein Laminat, bei dem das mindestens eine thermoplastische Polyurethan (TPU) eine Schmelztemperatur (T_{M(TPU)}) aufweist, die im Bereich von 140 bis 240 °C liegt.

Zur Bestimmung der Schmelztemperatur (T_{M(TPU)}) gemäß ISO 11357-3:2014 wird das mindestens eine thermoplastische Polyurethan (TPU) üblicherweise als Granulat eingesetzt. Das Granulat des mindestens einen thermoplastischen Polyurethans (TPU) weist dann üblicherweise eine Größe im Bereich von 1 mm bis 10 mm auf.

Das mindestens eine thermoplastische Polyurethan (TPU) weist üblicherweise eine Glasübergangstemperatur (T_{G(TPU)}) auf. Die Glasübergangstemperatur (T_{G(TPU)}) liegt beispielsweise im Bereich von -150 bis 20 °C, bevorzugt im Bereich von -80 bis 0 °C und insbesondere bevorzugt im Bereich von -60 bis -20 °C, bestimmt gemäß ISO 11357-2:2014.

Gegenstand der vorliegenden Erfindung ist daher auch ein Laminat, bei dem das mindestens eine thermoplastische Polyurethan (TPU) eine Glasübergangstemperatur (T_{G(TPU)}) aufweist, wobei die Glasübergangstemperatur (T_{G(TPU)}) im Bereich von -150 bis 20 °C liegt.

Die Glasübergangstemperatur (T_{G(TPU)}) des mindestens einen thermoplastischen Polyurethans (TPU) bezieht sich entsprechend der ISO 11357-2:2014 im Rahmen der vorliegenden Erfindung auf die Glasübergangstemperatur (T_{G(TPU)}) des trockenen, mindestens einen thermoplastischen Polyurethans (TPU).

"Trocken" bedeutet im Rahmen der vorliegenden Erfindung, dass das mindestens eine thermoplastische Polyurethan (TPU) weniger als 1 Gew.-%, bevorzugt weniger als 0,5 Gew.-% und insbesondere bevorzugt weniger als 0,1 Gew.-% Wasser enthält, bezogen auf das Gesamtgewicht des mindestens einen thermoplastischen Polyurethans (TPU). Mehr bevorzugt bedeutet "trocken", dass das mindestens eine thermoplastische Polyurethan (TPU) kein Wasser enthält, und am meisten bevorzugt, dass das mindestens eine thermoplastische Polyurethan (TPU) kein Lösungsmittel enthält.

Das mindestens eine thermoplastische Polyurethan (TPU) weist beispielsweise ein E-Modul im Bereich von 800 bis 1400 MPa auf, bevorzugt im Bereich von 900 bis 1350 MPa und besonders bevorzugt im Bereich von 1000 bis 1300 MPa, bestimmt gemäß DIN EN ISO 527-1:2012.

Gegenstand der vorliegenden Erfindung ist daher auch ein Laminat, bei dem das mindestens eine thermoplastische Polyurethan (TPU) ein E-Modul im Bereich von 800 bis 1400 MPa aufweist.

### Komponente (A)

Erfindungsgemäß ist die Komponente (A) mindestens ein Polyetherpolyol.

Im Rahmen der vorliegenden Erfindung werden die Begriffe "Komponente (A)" und "mindestens ein Polyetherpolyol" synonym gebraucht und besitzen daher die gleiche Bedeutung.

"Mindestens ein Polyetherpolyol" bedeutet im Rahmen der vorliegenden Erfindung sowohl genau ein Polyetherpolyol als auch eine Mischung aus zwei oder mehreren Polyetherpolyolen.

Unter "Polyetherpolyolen" werden im Rahmen der vorliegenden Erfindung Polyether mit zwei oder mehreren Alkoholgruppen (Hydroxygruppen, OH-Gruppen) verstanden. Bevorzugt als Polyetherpolyole sind Polyetherdiole. Unter "Polyetherdiolen" werden Polyether verstanden, die genau zwei Alkoholgruppen (OH-Gruppen; Hydroxygruppen) aufweisen. Polyetherpolyole sind dem Fachmann als solche bekannt.

Bevorzugte Polyetherpolyole sind beispielsweise erhältlich durch anionische Polymerisation von Alkylenoxiden mit Alkalihydroxiden, wie beispielsweise Natriumoder Kaliumhydroxid, oder Alkalialkoholaten, wie Natriummethylat, Natrium- oder Kaliumethylat, oder Kaliumisopropylat als Katalysatoren, unter Zusatz mindestens eines Startermoleküls, wobei das Startermolekül zwei bis drei, vorzugsweise zwei reaktive Wasserstoffatome enthält. Darüber hinaus sind Polyetherpolyole erhältlich durch kationische Polymerisation von Alkylenoxiden mit zwei bis vier Kohlenstoffatomen im Alkylrest und unter Verwendung von Lewis-Säuren als Katalysatoren.

Bevorzugte Alkylenoxide sind beispielsweise ausgewählt aus der Gruppe bestehend aus Tetrahydrofuran, 1,3-Propylenoxid, Ethylenoxid und 1,2-Propylenoxid. Besonders bevorzugt sind Tetrahydrofuran, Ethylenoxid und 1,2-Propylenoxid. Am meisten bevorzugt ist Tetrahydrofuran.

Erfindungsgemäß bevorzugt ist daher die Komponente (A) ausgewählt aus der Gruppe bestehend aus Polytetrahydrofuran, Polyethylenoxid und Poly-1,2-propylenoxid. Erfindungsgemäß bevorzugt ist die Komponente (A) Polytetrahydrofuran.

Geeignete Startermoleküle sind dem Fachmann als solche bekannt. Beispielsweise sind die Startermoleküle ausgewählt aus der Gruppe bestehend aus Wasser, Ethandiol, 1,2-Propandiol, 1,4-Butandiol, Diethylenglykol, 1,6-Hexandiol und 2-Methyl-1,5-pentandiol.

Die Komponente (A) ist bevorzugt linear und weist beispielsweise in zahlenmittleres Molekulargewicht (Mₙ) im Bereich von 100 bis 8 000 g/mol, bevorzugt im Bereich von 200 bis 7 000 g/mol und besonders bevorzugt im Bereich von 600 bis 6 000 g/mol auf.

Gegenstand der vorliegenden Erfindung ist daher auch ein Laminat, bei dem die Komponente (A) ein zahlenmittleres Molekulargewicht (Mₙ) im Bereich von 100 bis 8000 g/mol aufweist.

### Komponente (B)

Erfindungsgemäß ist die Komponente (B) mindestens ein Polyisocyanat.

Im Rahmen der vorliegenden Erfindung werden die Begriffe "Komponente (B)" und "mindestens ein Polyisocyanat" synonym gebraucht und besitzen daher die gleiche Bedeutung.

"Mindestens ein Polyisocyanat" bedeutet im Rahmen der vorliegenden Erfindung sowohl genau ein Polyisocyanat als auch eine Mischung aus zwei oder mehreren Polyisocyanaten.

Unter einem "Polyisocyanat" werden im Rahmen der vorliegenden Erfindung Verbindungen verstanden, die zwei oder mehrere Isocyanatgruppen enthalten. Bevorzugt ist das mindestens eine Polyisocyanat ein organisches Polyisocyanat. Weiterhin bevorzugt ist das mindestens eine Polyisocyanat mindestens ein Diisocyanat.

Daher ist die Komponente (B) bevorzugt mindestens ein organisches Diisocyanat. Unter "organischen Diisocyanaten" werden im Rahmen der vorliegenden Erfindung aliphatische, cycloaliphatische, araliphatische und/oder aromatische Diisocyanate verstanden.

Beispielsweise ist die Komponente (B) ausgewählt aus der Gruppe bestehend aus Trimethylendiisocyanat, Tetramethylendiisocyanat, Pentamethylendiisocyanat, Hexamethylendiisocyanat, Heptamethylendiisocyanat, Oktamethylendiisocyanat, 2-Methylpentamethylendiisocyanat-1,5, 2-Ethylbutylendiisocyanat-1,4, 1-lsocyanato-3,3,5-trimethyl-5-isocyanatomethylcyclohexan (Isophorondiisocyanat; IPDI), 1,4- und/oder 1,3-Bis(isocyanatomethyl)cyclohexan (HXDI), 1,4-Cyclohexandiisocyanat, 1-Methyl-2,4-cyclohexandiisocyanat, 1-Methyl-2,6-cyclohexandiisocyanat, 4,4'-Dicyclohexylmethandiisocyanat, 2,4'-Dicyclohexylmethandiisocyanat, 2,2'-Dicyclohexylmethandiisocyanat, 2,2'-Diphenylmethandiisocyanat (2,2'-MDI), 2,4'-Diphenylmethandiisocyanat (2,4'-MDI), 4,4'-Diphenylmethandiisocyanat (4,4'-MDI), 1,5-Naphthylendiisocyanat (NDI), 2,4-Toluylendiisocyanat (2,4-TDI), 2,6-Toluylendiisocyanat (2,6TDI), 3,3'-Dimethyldiphenyldiisocyanat, 1,2-Diphenylethandiisocyanat und Phenylendiisocyanat.

Besonders bevorzugt ist die Komponente (B) ausgewählt aus der Gruppe bestehend aus 4,4'-Diphenylmethylendiisocyanat, 2,4'-Diphenylmethandiisocyanat und 2,2'-Diphenylmethandiisocyanat.

Gegenstand der vorliegenden Erfindung ist daher auch ein Laminat, bei dem die Komponente (B) ausgewählt ist aus der Gruppe bestehend aus 4,4'-Diphenylmethandiisocyanat, 2,4'-Diphenylmethandiisocyanat und 2,2'-Diphenylmethandiisocyanat.

### Komponente (C)

Die Komponente (C) ist mindestens ein C₂-C₂₀-Polyol.

Im Rahmen der vorliegenden Erfindung werden die Begriffe "Komponente (C)" und "mindestens ein C₂-C₂₀-Polyol" synonym gebraucht und besitzen daher die gleiche Bedeutung.

"Mindestens ein C₂-C₂₀-Polyol" bedeutet im Rahmen der vorliegenden Erfindung sowohl genau ein C₂-C₂₀-Polyol als auch eine Mischung aus zwei oder mehreren C₂-C₂₀-Polyolen.

Unter einem "C₂-C₂₀-Polyol" wird im Rahmen der vorliegenden Erfindung eine Verbindung mit zwei bis zwanzig C-Atomen (Kohlenstoffatomen) verstanden und mindestens zwei Alkoholgruppen (Hydroxygruppen; OH-Gruppen). Die Komponente (C) kann eine aliphatische, araliphatische, aromatische und/oder cycloaliphatische Verbindung mit zwei bis zwanzig Kohlenstoffatomen und zwei oder mehreren Alkoholgruppen (OH-Gruppen; Hydroxygruppen) sein. Bevorzugt weist die Komponente (C) genau zwei Hydroxygruppen auf.

Beispielsweise ist die Komponente (C) ausgewählt aus der Gruppe bestehend aus Ethylenglycol, 1,2-Propandiol, 1,3-Propandiol, 1,4-Butandiol, 1,6-Hexandiol, Dialkylenglykolen mit drei bis acht Kohlenstoffatomen, Trialkylenglykolen mit drei bis acht Kohlenstoffatomen und Tetraylkylenglykolen mit drei bis acht Kohlenstoffatomen.

Besonders bevorzugt ist die Komponente (C) ausgewählt aus der Gruppe bestehend aus Ethylenglycol 1,2-Propandiol, 1,3-Propandiol und 1,4-Butandiol.

Gegenstand der vorliegenden Erfindung ist daher auch ein Laminat, bei dem die Komponente (C) ausgewählt ist aus der Gruppe bestehend aus Ethylenglycol, 1,2-Propandiol, 1,3-Propandiol und 1,4-Butandiol.

### Herstellung

Das erfindungsgemäße Laminat kann nach allen dem Fachmann bekannten Methoden hergestellt werden. Bevorzugt erfolgt die Herstellung des Laminats in einem kontinuierlichen Verfahren.

Bevorzugt wird das erfindungsgemäße Laminat in einem Verfahren hergestellt umfassend die folgenden Schritte:
a) Bereitstellen einer Folie aus einer Polymerzusammensetzung (PZ), die mindestens ein thermoplastisches Polyurethan (TPU) enthält, wobei das mindestens eine thermoplastische Polyurethan (TPU) erhältlich ist durch Polymerisation mindestens der Komponenten
   (A) mindestens ein Polyetherpolyol,
   (B) mindestens ein Polyisocyanat,
   (C) mindestens ein C₂-C₂₀-Polyol,
b) Erwärmen einer ersten Platte aus mindestens einem ersten Metall,
c) Verpressen der erwärmten ersten Platte aus Schritt b) mit der in Schritt a) bereitgestellten Folie unter Erhalt des Laminats.

Gegenstand der vorliegenden Erfindung ist daher auch ein Verfahren zur Herstellung eines erfindungsgemäßen Laminats umfassend die Schritte
a) Bereitstellen einer Folie aus einer Polymerzusammensetzung (PZ), die mindestens ein thermoplastisches Polyurethan (TPU) enthält, wobei das mindestens eine thermoplastische Polyurethan (TPU) erhältlich ist durch Polymerisation mindestens der Komponenten
   (A) mindestens ein Polyetherpolyol,
   (B) mindestens ein Polyisocyanat,
   (C) mindestens ein C₂-C₂₀-Polyol,
b) Erwärmen einer erste Platte aus mindestens einem ersten Metall,
c) Verpressen der erwärmten ersten Platte aus Schritt b) mit der in Schritt a) bereitgestellten Folie unter Erhalt des Laminats.

Für die Polymerzusammensetzung (PZ) im erfindungsgemäßen Verfahren gelten die zuvor beschriebenen Ausführungen und Bevorzugungen für die Polymerzusammensetzung (PZ) des erfindungsgemäßen Laminats entsprechend.

Ebenso gelten für das mindestens eine thermoplastische Polyurethan (TPU) des Verfahrens die Ausführungen und Bevorzugungen für das mindestens eine thermoplastische Polyurethan (TPU) des Laminats entsprechend.

In Schritt a) wird eine Folie aus der Polymerzusammensetzung (PZ) bereitgestellt. Die in Schritt a) bereitgestellte Folie besteht aus der Polymerzusammensetzung (PZ). Verfahren zur Bereitstellung einer Folie aus einer Polymerzusammensetzung (PZ) sind dem Fachmann als solche bekannt. Bevorzugt wird die Folie in Schritt a) durch ein Extrusionsverfahren bereitgestellt.

Gegenstand der vorliegenden Erfindung ist daher auch ein Verfahren, bei dem die Folie in Schritt a) durch ein Extrusionsverfahren bereitgestellt wird.

Geeignete Extrusionsverfahren zur Bereitstellung des Folie aus der Polymerzusammensetzung (PZ) sind dem Fachmann bekannt und beispielsweise Castverfahren, Kalandrierverfahren, Blasverfahren oder Multiblasverfahren.

Die in Schritt a) bereitgestellte Folie aus der Polymerzusammensetzung kann beliebige Dicken aufweisen. Üblicherweise weist die in Schritt a) bereitgestellte Folie aus der Polymerzusammensetzung (PZ) eine Dicke im Bereich von 1 bis 20 % größer als die mindestens eine weitere Schicht des herzustellenden Laminats auf, bevorzugt im Bereich von 2 bis 15% größer als die mindestens eine weitere Schicht des herzustellenden Laminats und insbesondere bevorzugt im Bereich von 4 bis 10 % größer als die mindestens eine weitere Schicht des herzustellenden Laminats.

In Schritt b) wird eine erste Platte aus mindestens einem ersten Metall erwärmt. Die erste Platte besteht aus dem mindestens einen ersten Metall. Für das mindestens eine erste Metall gelten die zuvor beschriebenen Ausführungen und Bevorzugungen für das im Laminat enthaltene mindestens eine erste Metall entsprechend. Das Erwärmen der ersten Platte kann nach allen dem Fachmann bekannten Methoden erfolgen. Bevorzugt wird die erste Platte in Schritt b) induktiv erwärmt.

Gegenstand der vorliegenden Erfindung ist daher auch ein Verfahren, bei dem das Erwärmen der ersten Platte in Schritt b) induktiv erfolgt.

Die erste Platte kann in Schritt b) auf eine beliebige Temperatur erwärmt werden. Bevorzugt wird die erste Platte in Schritt b) auf eine Temperatur erwärmt, die oberhalb der Schmelztemperatur (T_{M(PZ)}) und unterhalb der Zersetzungstemperatur der Polymerzusammensetzung (PZ) liegt. Bevorzugt wird die erste Platte in Schritt b) auf eine Temperatur im Bereich von 150 bis 350 °C erwärmt, besonders bevorzugt im Bereich von 180 bis 280 °C und insbesondere bevorzugt im Bereich von 200 bis 220 °C.

Gegenstand der vorliegenden Erfindung ist daher auch ein Verfahren, bei dem die erste Platte in Schritt b) auf eine Temperatur im Bereich von 150 bis 350 °C erwärmt wird.

In Schritt c) wird die erwärmte erste Platte aus Schritt b) mit der in Schritt a) bereitgestellten Folie unter Erhalt des Laminats verpresst. Dabei verbindet sich die Folie mit der ersten Platte. Die Dicke der Folie kann dabei abnehmen.

Verfahren zum Verpressen der erwärmten ersten Platte aus Schritt b) mit der in Schritt a) bereitgestellten Folie in Schritt c) sind dem Fachmann als solche bekannt.

Die Schritte b) und c) können gleichzeitig oder nacheinander durchgeführt werden. Bevorzugt werden die Schritte b) und c) gleichzeitig durchgeführt. Dann wird die erste Platte erwärmt, während sie mit der in Schritt a) bereitgestellten Folie verpresst wird.

Das in Schritt c) erhaltenen Laminat wird üblicherweise abgekühlt. Das Abkühlen kann nach allen dem Fachmann bekannten Verfahren erfolgen, beispielsweise durch das Einblasen von Druckluft auf das Laminat. Bevorzugt wird das Laminat abgekühlt, während der Druck des Verpressens aufrechterhalten wird.

In dem erhaltenen Laminat ist die erwärmte erste Platte die mindestens eine erste Schicht aus mindestens einem ersten Metall und die Folie ist die mindestens eine weitere Schicht der Polymerzusammensetzung (PZ).

Für den Fall, dass das Laminat mindestens eine zweite Schicht enthalten soll, wird ein zusätzlicher Schritt b1) durchgeführt, bei dem eine zweite Platte aus mindestens einem zweiten Metall erwärmt wird. Für das Erwärmen der zweiten Platte in Schritt b1) gelten die zuvor beschriebenen Ausführungen und Bevorzugungen für das Erwärmen der ersten Platte in Schritt b) entsprechend.

In Schritt c) wird dann die erwärmte erste Platte mit der erwärmten zweiten Platte aus Schritt b1) verpresst, während sich die in Schritt a) bereitgestellte Folie zwischen den beiden Platten befindet.

Das Verfahren zur Herstellung des erfindungsgemäßen Laminats umfasst dann üblicherweise die folgenden Schritte:
a) Bereitstellen einer Folie aus einer Polymerzusammensetzung (PZ), die mindestens ein thermoplastisches Polyurethan (TPU) enthält, wobei das mindestens eine thermoplastische Polyurethan (TPU) erhältlich ist durch Polymerisation mindestens der Komponenten
   (A) mindestens ein Polyetherpolyol,
   (B) mindestens ein Polyisocyanat,
   (C) mindestens ein C₂-C₂₀-Polyol,
b) Erwärmen einer ersten Platte aus mindestens einem ersten Metall,
   b1) Erwärmen einer zweiten Platte aus mindestens einem zweiten Metall,
c) Positionieren der in Schritt a) bereitgestellten Folie zwischen der in Schritt b) erwärmten ersten Platte und der in Schritt b1) erwärmten zweiten Platte und Verpressen der in Schritt b) erwärmten ersten Platte und der in Schritt b1) erwärmten zweiten Platte mit der in Schritt a) bereitgestellten Folie unter Erhalt des Laminats.

Gegenstand der vorliegenden Erfindung ist daher auch ein Verfahren zur Herstellung eines erfindungsgemäßen Laminats, das zusätzlich mindestens eine zweite Schicht mindestens eines zweiten Metalls umfasst, und bei dem die mindestens eine erste Schicht mit der mindestens einen zweiten Schicht über die mindestens eine weitere Schicht verbunden ist, umfassend die Schritte
a) Bereitstellen einer Folie aus einer Polymerzusammensetzung (PZ), die mindestens ein thermoplastischen Polyurethan (TPU) enthält, wobei das mindestens eine thermoplastische Polyurethan (TPU) erhältlich ist durch Polymerisation mindestens der Komponenten
   (A) mindestens ein Polyetherpolyol,
   (B) mindestens ein Polyisocyanat,
   (C) mindestens ein C₂-C₂₀-Polyol,
b) Erwärmen einer ersten Platte aus mindestens einem ersten Metall,
   b1) Erwärmen einer zweiten Platte aus mindestens einem zweiten Metall,
c) Positionieren der in Schritt a) bereitgestellten Folie zwischen der in Schritt b) erwärmten ersten Platte und der in Schritt b1) erwärmten zweiten Platte und Verpressen der in Schritt b) erwärmten ersten Platte und der in Schritt b1) erwärmten zweiten Platte mit der in Schritt a) bereitgestellten Folie unter Erhalt des Laminats.

Für das mindestens eine zweite Metall der zweiten Platte in dem erfindungsgemäßen Verfahren gelten die zuvor beschriebenen Ausführungen und Bevorzugungen für das gegebenenfalls im Laminat enthaltene mindestens eine zweite Metall der mindestens einen zweiten Schicht entsprechend.

Für die zweite Platte sowie das Erwärmen der zweiten Platte gelten die zuvor beschriebenen Ausführungen und Bevorzugungen für die erste Platte und das Erwärmen der ersten Platte entsprechend.

Ebenso gelten für Schritt c), in dem zusätzlich die zweite Platte positioniert wird, die zuvor beschriebenen Ausführungen und Bevorzugungen für Schritt c) entsprechend.

Nachfolgend wird die vorliegende Erfindung anhand von Beispielen näher erläutert, ohne sie hierauf zu beschränken.

### Beispiele

Es wurden die folgenden Komponenten eingesetzt.

### Thermoplastisches Polyurethan

- TPU1:: Elastollan 1174 D (thermoplastisches Polyurethan der BASF SE; MDI/Polyetherol-Copolym er)
- TPU2:: Elastollan 1283 D11 (thermoplastisches Polyurethan der BASF SE, MDI/Polyetherol-Copolym er)
- TPU3:: Elastollan C74 D (thermoplastisches Polyurethan der BASF SE; MDI/Polyesterol-Copolymer)

### Erstes und zweites Metall

### Stahl

### Herstellung von Laminaten

Die in Tabelle 1 angegebenen Polymere wurden in den in Tabelle 1 angegebenen Mengen mit einem Haake PolyLab QC mit Extruder CTW100 bei 230 °C compoundiert unter Erhalt einer Polymerzusammensetzung und über eine Breitschlitzfoliendüse mit 100 mm Breite extrudiert. Der erhaltene Strang wurde über eine wassergekühlte 20 cm breite Walze zu einer Folie von mindestens 5 mm Breite und 420 µm Dicke verarbeitet und aufgewickelt. Die in Tabelle 1 angegebenen Mengen sind jeweils in Gewichtsprozent.

Die Folien der Polymerzusammensetzung sowie die erste Platte und die zweite Platte des Stahls wurden vor der Herstellung der Laminate für sieben Tage bei 80 °C und einem Druck von < 5 mbar getrocknet.

Zur Herstellung des Laminats wurden eine erste Platte des Stahls und eine zweite Platte des Stahls in eine Vorrichtung eingelegt. Zwischen die erste Platte und die zweite Platte wurde eine Folie der Polymerzusammensetzung eingelegt. Die Platten wurden mit einer hydraulischen Presse für 60 Sekunden bei 250 °C und 30 bar verpresst.

Zur Abkühlung wurde das Laminat heiß aus der Presse entnommen und mit einem Stahlblech (40 x 40 mm, 5 mm Dicke) abgedeckt. Nach dem Abkühlen wurden die Laminate an Luft mit < 1 % relativer Feuchte gelagert. Die Probenkörper wurden in einer Zwickmaschine (Zwicki BT1-FR5.0TN mit pneumatischen Spannbacken) in Anlehnung an DIN EN ISO 11339 gemessen, wobei die Messgeschwindigkeit 200 mm/min und die Dicke der Probenkörper 0,85 bis 0,9 mm beträgt. Aus der aus 100 mm Messstrecke ermittelten Zugkraft in Newton (N) wird über die gesamte Messung der Mittelwert gebildet und auf 40 mm Breite rechnerisch korrigiert. Die Ergebnisse (T-Peel) für die verschiedenen Laminate sind ebenfalls in Tabelle 1 zu sehen.

Das E-Modul der Laminate wurde bestimmt gemäß ISO 527-1:2012. Die Ergebnisse sind ebenfalls in Tabelle 1 zu sehen.

**Tabelle 1**

| | | **TPU1** | **TPU2** | **TPU3** | **E-Modul [MPa]** | **T-Peel [N]** |
|---|---|---|---|---|---|---|
| **B1** | PZ1 | 70 | 30 | | 1030 | 553 |
| **B2** | PZ2 | 60 | 40 | | 1150 | 456 |
| **B3** | PZ3 | 50 | 50 | | 1290 | 449 |
| **B4** | PZ4 | 40 | 60 | | 1430 | 380 |
| **B5** | PZ5 | 100 | | | 670 | 544 |
| **V6** | PZ6 | | | 100 | 660 | 337 |
| **V7** | PZ7 | | 50 | 50 | 1260 | 375 |
| **B8** | PZ8 | | 100 | | 1922 | 54 |

Die erfindungsgemäßen Laminate haben besonders gute Peel-Eigenschaften und weisen ein gutes E-Modul auf.

## Patentansprüche

1. Laminat umfassend mindestens eine erste Schicht mindestens eines ersten Metalls und mindestens eine weitere Schicht einer Polymerzusammensetzung (PZ), die mindestens ein thermoplastisches Polyurethan (TPU) enthält, **dadurch gekennzeichnet, dass** das mindestens eine thermoplastische Polyurethan (TPU) erhältlich ist durch Polymerisation mindestens der Komponenten
(A) mindestens ein Polyetherpolyol,
(B) mindestens ein Polyisocyanat,
(C) mindestens ein C₂-C₂₀-Polyol.

2. Laminat gemäß Anspruch 1, **dadurch gekennzeichnet, dass** das Laminat zusätzlich mindestens eine zweite Schicht mindestens eines zweiten Metalls umfasst und dass die mindestens eine erste Schicht mit der mindestens einen zweiten Schicht über die mindestens eine weitere Schicht verbunden ist.

3. Laminat gemäß Anspruch 1 oder 2, **dadurch gekennzeichnet, dass** das mindestens eine thermoplastische Polyurethan (TPU) eine Glasübergangstemperatur (T_{G(TPU)}) im Bereich von -150 °C bis 20 °C aufweist, bestimmt gemäß ISO 11357-2:2014.

4. Laminat gemäß einem der Ansprüche 1 bis 3, **dadurch gekennzeichnet, dass** das thermoplastische Polyurethan (TPU) erhältlich ist durch Polymerisation von im Bereich von 5 bis 50 Gew.-% der Komponente (A), im Bereich von 20 bis 80 Gew.-% der Komponente (B) und im Bereich von 5 bis 40 Gew.-% der Komponente (C), jeweils bezogen auf die Summe der Gewichtsprozente der Komponenten (A), (B) und (C).

5. Laminat gemäß einem der Ansprüche 1 bis 4, **dadurch gekennzeichnet, dass** die Komponente (B) ausgewählt ist aus der Gruppe bestehend aus 4,4'-Diphenylmethandiisocyanat, 2,4'-Diphenylmethandiisocyanat und 2,2'-Diphenylmethandiisocyanat.

6. Laminat gemäß einem der Ansprüche 1 bis 5, **dadurch gekennzeichnet, dass** die Komponente (C) ausgewählt ist aus der Gruppe bestehend aus Ethylenglycol, 1,2-Propandiol, 1,3-Propandiol und 1,4-Butandiol.

7. Laminat gemäß einem der Ansprüche 1 bis 6, **dadurch gekennzeichnet, dass** das mindestens eine thermoplastische Polyurethan (TPU) ein E-Modul im Bereich von 800 bis 1400 MPa aufweist, bestimmt gemäß ISO 527-1:2012.

8. Laminat gemäß einem der Ansprüche 1 bis 7, **dadurch gekennzeichnet, dass** die Komponente (A) ein zahlenmittleres Molekulargewicht (Mₙ) im Bereich von 100 bis 8000 g/mol aufweist.

9. Laminat gemäß einem der Ansprüche 1 bis 8, **dadurch gekennzeichnet, dass** das mindestens eine erste Metall ausgewählt ist aus der Gruppe bestehend aus Eisen, Aluminium, Kupfer, Nickel und Magnesium sowie Legierungen daraus.

10. Laminat gemäß einem der Ansprüche 1 bis 9, **dadurch gekennzeichnet, dass** die mindestens eine erste Schicht eine Dicke im Bereich von 0,1 mm bis 0,6 mm aufweist und/oder dass die mindestens eine weitere Schicht eine Dicke im Bereich von 0,02 bis 1,5 mm aufweist.

11. Laminat gemäß einem der Ansprüche 1 bis 10, **dadurch gekennzeichnet, dass** die Polymerzusammensetzung (PZ) zusätzlich mindestens ein Additiv ausgewählt aus der Gruppe bestehend aus Stabilisatoren, Farbstoffen, Antistatika, Füllölen, Oberflächenverbesserern, Sikkativen, Entformungshilfsmitteln, Trennmitteln, Antioxidantien, Lichtstabilisatoren, PVC-Stabilisatoren, Gleitmitteln, Flammschutzmitteln, Treibmitteln, Schlagzähmodifikatoren, Haftvermittlern, Kopplungsmitteln und Nukleierungshilfsmitteln enthält.

12. Verfahren zur Herstellung eines Laminats gemäß einem der Ansprüche 1 bis 11, umfassend die Schritte
a) Bereitstellen einer Folie aus einer Polymerzusammensetzung (PZ), die mindestens ein thermoplastisches Polyurethan (TPU) enthält, wobei das mindestens eine thermoplastische Polyurethan (TPU) erhältlich ist durch Polymerisation mindestens der Komponenten
(A) mindestens ein Polyetherpolyol,
(B) mindestens ein Polyisocyanat,
(C) mindestens ein C₂-C₂₀-Polyol,
b) Erwärmen einer erste Platte aus mindestens einem ersten Metall,
c) Verpressen der erwärmten ersten Platte aus Schritt b) mit der in Schritt a) bereitgestellten Folie unter Erhalt des Laminats.

13. Verfahren gemäß Anspruch 12, **dadurch gekennzeichnet, dass** die erste Platte in Schritt b) auf eine Temperatur im Bereich von 150 bis 350 °C erwärmt wird.

14. Verfahren gemäß Anspruch 12 oder 13, **dadurch gekennzeichnet, dass** das Erwärmen der ersten Platte in Schritt b) induktiv erfolgt.

15. Verfahren gemäß einem der Ansprüche 12 bis 14, **dadurch gekennzeichnet, dass** die Folie in Schritt a) durch ein Extrusionsverfahren bereitgestellt wird.

## Claims

1. A laminate comprising at least one first layer of at least one first metal and at least one further layer of a polymer composition (PC) comprising at least one thermoplastic polyurethane (TPU), wherein the at least one thermoplastic polyurethane (TPU) is obtainable by polymerizing at least the following components:
(A) at least one polyether polyol,
(B) at least one polyisocyanate,
(C) at least one C₂-C₂₀ polyol.

2. The laminate according to claim 1, wherein the laminate additionally comprises at least one second layer of at least one second metal and wherein the at least one first layer is joined to the at least one second layer via the at least one further layer.

3. The laminate according to claim 1 or 2, wherein the at least one thermoplastic polyurethane (TPU) has a glass transition temperature (T_{G(TPU)}) in the range from -150°C to 20°C, determined according to ISO 11357-2:2014.

4. The laminate according to any of claims 1 to 3, wherein the thermoplastic polyurethane (TPU) is obtainable by polymerizing in the range from 5% to 50% by weight of component (A), in the range from 20% to 80% by weight of component (B) and in the range from 5% to 40% by weight of component (C), based in each case on the sum total of the percentages by weight of components (A), (B) and (C).

5. The laminate according to any of claims 1 to 4, wherein component (B) is selected from the group consisting of diphenylmethane 4,4'-diisocyanate, diphenylmethane 2,4'-diisocyanate and diphenylmethane 2,2'-diisocyanate.

6. The laminate according to any of claims 1 to 5, wherein component (C) is selected from the group consisting of ethylene glycol, propane-1,2-diol, propane-1,3-diol and butane-1,4-diol.

7. The laminate according to any of claims 1 to 6, wherein the at least one thermoplastic polyurethane (TPU) has a modulus of elasticity in the range from 800 to 1400 MPa, determined according to ISO 527-1:2012.

8. The laminate according to any of claims 1 to 7, wherein component (A) has a number average molecular weight (Mₙ) in the range from 100 to 8000 g/mol.

9. The laminate according to any of claims 1 to 8, wherein the at least one first metal is selected from the group consisting of iron, aluminum, copper, nickel and magnesium and alloys thereof.

10. The laminate according to any of claims 1 to 9, wherein the at least one first layer has a thickness in the range from 0.1 mm to 0.6 mm and/or wherein the at least one further layer has a thickness in the range from 0.02 to 1.5 mm.

11. The laminate according to any of claims 1 to 10, wherein the polymer composition (PC) further comprises at least one additive selected from the group consisting of stabilizers, dyes, antistats, filler oils, surface improvers, siccatives, demolding agents, release agents, antioxidants, light stabilizers, PVC stabilizers, lubricants, flame retardants, blowing agents, impact modifiers, adhesion promoters, coupling agents and nucleating agents.

12. A process for producing a laminate according to any of claims 1 to 11, comprising the steps of
a) providing a film of a polymer composition (PC) comprising at least one thermoplastic polyurethane (TPU), where the at least one thermoplastic polyurethane (TPU) is obtainable by polymerizing at least the following components:
(A) at least one polyether polyol,
(B) at least one polyisocyanate,
(C) at least one C₂-C₂₀ polyol,
b) heating a first sheet of at least one first metal,
c) pressing the heated first sheet from step b) with the film provided in step a) to obtain the laminate.

13. The process according to claim 12, wherein step b) comprises heating the first sheet to a temperature in the range from 150°C to 350°C.

14. The process according to claim 12 or 13, wherein the heating of the first sheet in step b) is effected by inductive means.

15. The process according to any of claims 12 to 14, wherein step a) comprises providing the film by an extrusion process.

## Revendications

1. Stratifié comprenant au moins une première couche d'au moins un premier métal et au moins une couche supplémentaire d'une composition de polymère (PZ) qui contient au moins un polyuréthane thermoplastique (TPU), **caractérisé en ce que** l'au moins un polyuréthane thermoplastique (TPU) peut être obtenu par polymérisation d'au moins les composants
(A) au moins un polyétherpolyol,
(B) au moins un polyisocyanate,
(C) au moins un polyol en C₂₋₂₀.

2. Stratifié selon la revendication 1, **caractérisé en ce que** le stratifié comprend de plus au moins une deuxième couche d'au moins un deuxième métal et **en ce que** l'au moins une première couche est reliée à l'au moins une deuxième couche par le biais de l'au moins une couche supplémentaire.

3. Stratifié selon la revendication 1 ou 2, **caractérisé en ce que** l'au moins un polyuréthane thermoplastique (TPU) présente une température de transition vitreuse (T_{G(TPU)}) dans la plage de -150 °C à 20 °C, déterminée selon la norme ISO 11357-2:2014.

4. Stratifié selon l'une quelconque des revendications 1 à 3, **caractérisé en ce que** le polyuréthane thermoplastique (TPU) peut être obtenu par polymérisation d'une quantité dans la plage de 5 à 50 % en poids du composant (A), dans la plage de 20 à 80 % en poids du composant (B) et dans la plage de 5 à 40 % en poids du composant (C), à chaque fois par rapport à la somme des pourcentages en poids des composants (A), (B) et (C).

5. Stratifié selon l'une quelconque des revendications 1 à 4, **caractérisé en ce que** le composant (B) est choisi dans le groupe constitué par le 4,4'-diisocyanate de diphénylméthane, le 2,4'-diisocyanate de diphénylméthane et le 2,2'-diisocyanate de diphénylméthane.

6. Stratifié selon l'une quelconque des revendications 1 à 5, **caractérisé en ce que** le composant (C) est choisi dans le groupe constitué par l'éthylène glycol, le 1, 2-propanediol, le 1, 3-propanediol et le 1,4-butanediol.

7. Stratifié selon l'une quelconque des revendications 1 à 6, **caractérisé en ce que** l'au moins un polyuréthane thermoplastique (TPU) présente un module E dans la plage de 800 à 1 400 MPa, déterminé selon la norme ISO 527-1:2012.

8. Stratifié selon l'une quelconque des revendications 1 à 7, **caractérisé en ce que** le composant (A) présente un poids moléculaire moyen en nombre (Mₙ) dans la plage de 100 à 8 000 g/mole.

9. Stratifié selon l'une quelconque des revendications 1 à 8, **caractérisé en ce que** l'au moins un premier métal est choisi dans le groupe constitué par le fer, l'aluminium, le cuivre, le nickel et le magnésium ainsi que des alliages de ceux-ci.

10. Stratifié selon l'une quelconque des revendications 1 à 9, **caractérisé en ce que** l'au moins une première couche présente une épaisseur dans la plage de 0,1 mm à 0, 6 mm et/ou **en ce que** l'au moins une couche supplémentaire présente une épaisseur dans la plage de 0,02 à 1,5 mm.

11. Stratifié selon l'une quelconque des revendications 1 à 10, **caractérisé en ce que** la composition de polymère (PZ) contient de plus au moins un additif choisi dans le groupe constitué par des stabilisants, des colorants, des antistatiques, des huiles de remplissage, des agents d'amélioration de surface, des siccatifs, des auxiliaires de démoulage, des agents de séparation, des antioxydants, des photostabilisants, des stabilisants de PVC, des agents glissants, des agents ignifugeants, des agents gonflants, des agents de modification de la résistance aux chocs, des agents adhésifs, des agents de couplage et des auxiliaires de nucléation.

12. Procédé de préparation d'un stratifié selon l'une quelconque des revendications 1 à 11, comprenant les étapes de
a) mise à disposition d'une feuille composée d'une composition de polymère (PZ), qui contient au moins un polyuréthane thermoplastique (TPU), l'au moins un polyuréthane thermoplastique (TPU) pouvant être obtenu par polymérisation d'au moins les composants
(A) au moins un polyétherpolyol,
(B) au moins un polyisocyanate,
(C) au moins un polyol en C2-20,
b) chauffage d'une première plaque composée d'au moins un premier métal,
c) compression de la première plaque chauffée de l'étape b) avec la feuille mise à disposition dans l'étape a) avec obtention du stratifié.

13. Procédé selon la revendication 12, **caractérisé en ce que** la première plaque dans l'étape b) est chauffée à une température dans la plage de 150 à 350 °C.

14. Procédé selon la revendication 12 ou 13, **caractérisé en ce que** le chauffage de la première plaque dans l'étape b) est réalisé de manière inductive.

15. Procédé selon l'une quelconque des revendications 12 à 14, **caractérisé en ce que** la feuille dans l'étape a) est mise à disposition par un procédé d'extrusion.
